# DEMANDE DE BREVET EUROPEEN

(11) **EP 0 930 731 A1**
(43) Date de publication de la demande: **21.07.1999**
(21) Numéro de dépôt: 99400021.4
(22) Date de dépôt: 07.01.1999
(51) Int. Cl.: H04B 10/17

(54) **Amplificateur optique a excursion de gain optimale pour differentes puissances d'entrée**

(30) Priorité: 08.01.1998 FR 9800120
(71) Demandeur: ALCATEL, 75008 Paris (FR)
(72) Inventeur: Bayart, Dominique, 92140 Clamart (FR); Desthieux, Bertrand, 75014 Paris (FR)
(74) Mandataire: Lamoureux, Bernard

(57) **Abrégé**

L'invention concerne un dispositif d'amplification optique, comprenant un amplificateur (1) présentant une excursion de gain optimale dans une plage de longueur d'onde donnée pour une puissance d'entrée donnée, et un filtre (2) présentant une fonction de transfert en cloche, dont la longueur d'onde centrale est accordable sur un domaine suffisante pour permettre de réduire l'excursion de gain de l'amplificateur sur la dite plage lorsque la puissance reçue par l'amplificateur est différente de la dite puissance d'entrée.

Elle permet l'adaptation des dispositifs d'amplification aux pertes en lignes, avec des pertes minimales.

## Description

La présente invention concerne un dispositif d'amplification optique, qui présente une excursion de gain optimale pour différentes puissances d'entrée; elle concerne aussi un système de transmission comprenant un tel dispositif, et un procédé d'adaptation d'un amplificateur optique à une puissance d'entrée.

L'invention concerne les amplificateurs optiques, et plus particulièrement les amplificateurs optiques destinés à être utilisés pour les systèmes de transmission par fibre optique à multiplexage de longueur d'onde. De tels amplificateurs sont utilisés pour compenser à intervalles réguliers la perte de ligne. Ces amplificateurs sont de préférence identiques sur toute la liaison, et présentent un gain aussi plat que possible sur toute la plage de longueur d'onde utilisée dans le système de transmission, pour une puissance d'entrée donnée. Un des problèmes rencontrés lors de l'installation des systèmes de transmission par fibres optiques est que les pertes de ligne sur les sections de la liaison entre les différents amplificateurs présentent des valeurs différentes; les amplificateurs reçoivent alors des puissances différentes, de sorte que la perfomance du système est améliorée si l'on adapte chaque amplificateur en fonction de la perte en ligne de la section de fibre qui le précède, pour assurer un gain plat malgré les variations de la puissance appliquée en entrée.

Pour réaliser cette adaptation, il a été proposé de donner à l'amplificateur un gain supérieur au gain théoriquement nécessaire, et de lui associer un atténuateur optique variable permettant de réduire le gain de l'ensemble amplificateur atténuateur à la valeur nécessaire, en fonction de la perte en ligne sur la section concernée. Dans cette solution, on adapte la perte de chaque atténuateur optique de sorte que la somme de la perte en ligne sur la section concernée et de la perte de l'atténuateur soit constante. Cette solution dégrade la performance de la liaison en termes de bruit: on choisit pour la valeur de gain de l'amplificateur la valeur correspondant aux pertes maximales en ligne sur la section concernée.

Une autre solution pour réaliser cette adaptation de l'amplificateur consiste à faire intentionnellement varier la longueur de fibre optique dopée selon les amplificateurs. Cette solution est complexe à mettre en oeuvre et chère.

L'invention a donc pour objet de fournir une solution permettant d'adapter facilement le gain d'un amplificateur optique, par exemple en fonction de la perte en ligne sur la section de fibre optique précédant l'amplificateur dans un système de transmission, de sorte à assurer à l'amplificateur un gain plat. L'invention a aussi pour objet de minimiser les pertes et maximiser le rapport signal sur bruit du fait de cette adaptation.

Un article de Kyo Inoue et autres, Tunable Gain Equalization Using a Mach Zender Optical Fiber in Multistage Fiber Amplifiers, IEEE Photonics Technology Letters, vol. 3 no 8, (1991) propose d'utiliser un filtre optique Mach Zender pour adapter le gain d'un EDFA (amplificateur à fibre dopée à l'erbium) à trois étages, dans un système de transmission en multiplexage de longueur d'onde à 29 canaux. Dans cet article, le problème rencontré est celui des variations du gain (en anglais gain unbalance) de chacun des amplificateurs sur la bande du multiplex. Ce défaut est acceptable pour chacun des amplificateurs, mais provoque après plusieurs étages d'amplification des variations de gains inacceptables sur la bande du multiplex. Pour pallier ce problème, il est proposé d'utiliser la pente de la transmittance d'un filtre Mach Zender pour compenser les variations de gain induite sur la bande du multiplex par trois étages d'amplificateurs EDFA.

Cet article propose une solution différente de celle de l'invention à un problème différent. Le problème de cette invention est de compenser les variations cumulées de gain sur la largeur de bande du filtre, i. e. d'égaliser le gain sur la bande du WDM pour compenser le cumul de variations de gain sur les différents canaux du WDM.

La solution proposée reflète ce problème. Tout d'abord, le montage proposé ne comprend qu'un seul filtre pour trois étages d'amplification: de fait, le but est de corriger l'égalisation aussi peu souvent que possible, et uniquement lorsque ceci s'avère nécessaire, i. e. lorsque les variations cumulées du gain sont importantes; l'article précise que les techniques antérieures sont inadaptées à une "compensation réglable des variations de gain cumulées". De ce point de vue, l'enseignement de ce document va à l'encontre de la solution de l'invention.

Ensuite, la solution proposée ne permet pas d'adapter l'amplificateur à la puissance reçue, mais au mieux d'égaliser le gain cumulé, dans un seul sens de variation. Ceci provient de la plage d'accord du filtre Mach Zender utilisé; ce filtre n'est pas accordable sur une plage de longueur d'onde suffisante pour faire changer le signe de la pente du filtre; en outre, même si tel était le cas, ce changement de signe de la pente du filtre augmenterait les variations de gain sur la plage de longueur d'onde du multiplex. L'enseignement de ce document, de ce point de vue aussi, va à l'encontre de la solution de l'invention.

Par ailleurs, la société Photonics Technologies, Pagewood, New South Wales, Australie, propose sous la marque AmpFlat un filtre aplanisseur de gain. Ce filtre a pour but de compenser les variations de gain sur la bande d'un EDFA; il est destiné à être ajouté à la plupart des EDFA pour améliorer ses performances. Ce filtre est fourni sous deux formes; une forme "laboratoire", qui permet un réglage des paramètres du filtres - fréquence centrale et extinction - et une forme "fixe", dont les paramètres sont fixés; il est précisé que cette forme fixe est disponible, "lorsque la réponse requise du filtre est bien définie", en "version miniaturisée environnementalement stable". Ce filtre se propose en fait de résoudre le même problème que l'article précité de Kyo Inoue, et contient un enseignement qui va à l'encontre d'un réglage du filtre sur le terrain. En tout état de cause, comme dans l'article précité, il est suggéré d'utiliser le filtre pour compenser les variations de gains sur la bande du multiplex, et non pas pour adapter l'amplificateur en fonction des puissances qu'il reçoit.

L'invention propose en conséquence un dispositif d'amplification, qui assure un gain plat, indépendamment de la puissance d'entrée, pour toute la bande de travail de l'amplificateur; dans le cas d'un système de transmission à multiplexage en longueur d'ondes, l'invention permet simplement d'adapter l'amplificateur aux pertes en ligne dans la section précédente, sans induire de pertes de performance en termes de rapport signal sur bruit.

Plus précisément, l'invention propose un système de transmission à fibre optique dans une plage de longueur d'onde donnée, comprenant une pluralité de sections de fibre de ligne séparées par des dispositifs d'amplification, caractérisé en ce que chaque dispositif d'amplification comprend un amplificateur présentant une excursion de gain optimale dans la dite plage pour une puissance d'entrée correspondant aux pertes moyennes dans la section de fibre de ligne précédente, et un filtre présentant une fonction de transfert en cloche, dont la longueur d'onde centrale est accordable sur un domaine suffisant pour réduire l'excursion de gain de l'amplificateur sur la dite plage pour des puissances reçues par l'amplificateur de part et d'autre de la dite puissance d'entrée.

Dans un mode de réalisation, le système est un système de transmission à multiplexage de longueur d'onde, et la plage de longueur d'onde est la plage de longueur d'onde du multiplex.

Dans un mode de réalisation, l'amplificateur est un amplificateur à fibre optique dopée présentant une seule section de fibre, et le filtre est disposé après ladite section.

Dans un autre mode de réalisation, l'amplificateur est un amplificateur à fibre optique dopée présentant une pluralité de sections de fibre, et le filtre est disposé avant la dernière section de fibre.

Avantageusement, la longueur d'onde centrale est accordable sur un domaine suffisant pour faire changer le signe de la pente moyenne de la fonction de transfert du filtre dans la dite plage de longueur d'onde.

De préférence, la pente de la réponse spectrale du filtre est une fonction décroissante monotone de la longueur d'onde.

L'invention concerne aussi un dispositif d'amplification comprenant un amplificateur présentant une excursion de gain optimale dans une plage de longueur d'onde donnée pour une puissance d'entrée donnée, et un filtre présentant une fonction de transfert en cloche, dont la longueur d'onde centrale est accordable sur un domaine suffisant pour permettre de réduire l'excursion de gain de l'amplificateur sur la dite plage pour des puissances reçues par l'amplificateur de part et d'autre de la dite puissance d'entrée.

Dans un mode de réalisation, l'amplificateur est un amplificateur à fibre optique dopée présentant une seule section de fibre, et le filtre est disposé après ladite section.

Dans un autre mode de réalisation, l'amplificateur est un amplificateur à fibre optique dopée présentant une pluralité de sections de fibre, et le filtre est disposé avant la dernière section de fibre.

Avantageusement, la longueur d'onde centrale est accordable sur un domaine suffisant pour faire changer le signe de la pente moyenne de la fonction de transfert du filtre dans la dite plage de longueur d'onde.

De préférence, la pente de la réponse spectrale du filtre est une fonction décroissante monotone de la longueur d'onde.

L'invention concerne enfin un procédé d'adaptation d'un amplificateur optique à une puissance d'entrée, comprenant les étapes de
- choix d'un amplificateur présentant une excursion de gain optimale pour une puissance d'entrée donnée;
- association de l'amplificateur à un filtre (2) à fonction de transfert en forme de cloche dont la longueur d'onde centrale est accordable;
- accord de longueur d'onde centrale du filtre pour réduire l'excursion de gain de l'amplificateur sur la dite plage en fonction de la puissance reçue par l'amplificateur.

Avantageusement, la longueur d'onde centrale est accordable sur un domaine suffisant pour faire changer le signe de la pente moyenne de la fonction de transfert du filtre dans la dite plage de longueur d'onde.

De préférence, la pente de la réponse spectrale du filtre est une fonction décroissante monotone de la longueur d'onde.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique d'une partie d'un système de transmission avec un dispositif d'amplification selon l'invention;
- figure 2 une représentation de la fonction de transfert du filtre de la figure 1;
- figure 3 une représentation de la fonction de transfert de l'amplificateur, pour une puissance d'entrée donnée;
- figure 4 une représentation de la fonction de transfert du filtre, pour une puissance d'entrée donnée;
- figure 5 une représentation de la fonction de transfert du dispositif d'amplification, pour une puissance d'entrée donnée;
- figures 6 à 8, des représentations analogues à celles des figures 3 à 5, pour une puissance d'entrée inférieure à la puissance donnée;
- figures 9 à 11, des représentations analogues à celles des figures 3 à 5, pour une puissance d'entrée supérieure à la puissance donnée;

L'invention propose, pour permettre l'adaptation des amplificateurs à la perte en ligne sur la section précédente de la liaison, non pas de changer le gain des amplificateurs, mais de choisir un amplificateur présentant une excursion de gain optimale pour la puissance d'entrée moyenne, et d'associer à l'amplificateur un filtre permettant de corriger les variations du gain pour des puissances d'entrée différentes. En d'autres termes, l'amplificateur présente un gain aussi plat ou égalisé que possible pour la puissance d'entrée moyenne. Le filtre est un filtre à fonction de transfert en forme de cloche, dont la longueur d'onde centrale est accordable sur une plage suffisante pour coniger les variations du gain; en d'autres termes, le filtre est accordable sur une plage suffisante pour que dans la bande de longueur d'onde de la liaison, la pente de la fonction de transfert du filtre change de signe. On arrive ainsi à compenser les variations provoquées sur le gain par les changements de la puissance d'entrée appliquée à l'amplificateur.

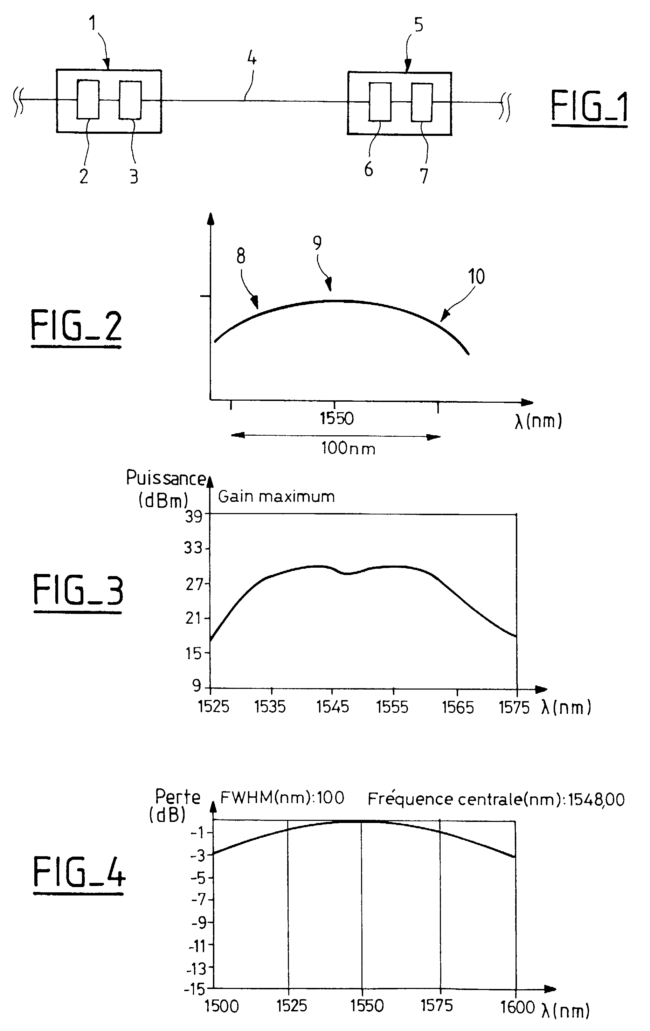

La figure 1 montre une représentation schématique d'un système de transmission avec un dispositif d'amplification selon l'invention; on a représenté sur la figure une section de fibre de ligne 4 délimitée par deux dispositifs d'amplification 1 et 5; chacun des dispositifs d'amplification comprend un amplificateur 2 ou 6, typiquement un EDFA; chaque dispositif comprend en outre un filtre 3 ou 7. Dans le cas où l'amplificateur ne comprend qu'une section de fibre, le filtre est de préférence monté après la section de fibre. Si l'amplificateur présente plusieurs sections de fibre, le filtre est de préférence disposé avant la dernière section de fibre; ceci est avantageux du point de vue du bruit et de la puissance de sortie de l'amplificateur. Le filtre est par exemple un filtre interférentiel.

La figure 2 est une représentation graphique de la fonction de transfert du filtre de la figure 1. Le filtre présente une forme en cloche; en d'autres termes, la valeur moyenne de la pente de la réponse spectrale du filtre dans la plage de longueur d'onde du système de transmission peut être négative, nulle ou positive, en fonction de l'accord de la fréquence centrale du filtre, comme expliqué ci-dessous. Avantageusement, la pente de la réponse spectrale du filtre est une fonction décroissante de la longueur d'onde; ceci permet d'augmenter la plage de puissance d'entrée susceptible d'être compensée.

Dans l'exemple de la figure 2, le filtre présente un flanc gauche 8 de pente positive, une partie centrale 9 de pente sensiblement nulle, et un flanc droit 10 de pente négative. La largeur du filtre est suffisante que chaque flanc et la partie centrale du filtre puisse recouvrir la bande de travail du dispositif d'amplification; dans le cas où le filtre est utilisé dans un système de transmission à multiplexage de longueur d'onde, la bande de travail correspond à la plage de longueur d'onde du multiplex. Dans l'exemple de la figure 2, le filtre présente une largeur (FWHM) de 100 nm, et est adapté à un usage dans un système de transmission à multiplexage de longueur d'onde dont le multiplex s'étend sur une longueur de 32 nm.

La fréquence ou longueur d'onde centrale du filtre est accordable, sur un domaine de longueur d'onde suffisant pour permettre la correction de l'excursion de gain de l'amplificateur sur la dite plage pour des puissances reçues par l'amplificateur de part et d'autre de la dite puissance d'entrée, comme expliqué dans la suite de la description. Dans l'exemple de la figure 2, la longueur d'onde centrale du filtre non-accordé est de 1548 nm, et le domaine d'accord est de 34 nm vers les courtes longueurs d'onde et de 64 nm vers les grandes longueurs d'onde.

Le fonctionnement du dispositif de la figure 1 est le suivant. L'amplificateur est choisi de sorte à présenter un gain plat pour une puissance donnée supposée être appliquée en entrée du dispositif d'amplification. Dans le cas d'un système de transmission à fibre optique à multiplexage de longueur d'onde, cette puissance donnée est calculée, pour un dispositif d'amplification 5 donné, à partir des pertes en ligne moyenne sur la section de fibre 4 précédente, i. e. depuis le dispositif d'amplification 1 précédent.

Dans un tel cas, l'application en entrée du dispositif d'amplification d'une puissance supérieure provoque une sursaturation de l'amplificateur, et les longueurs d'ondes les plus importantes sont alors plus amplifiées. Inversement, l'application d'une puissance inférieure provoque une désaturation de l'amplificateur, et les longueurs d'onde les plus faibles sont alors plus amplifiées.

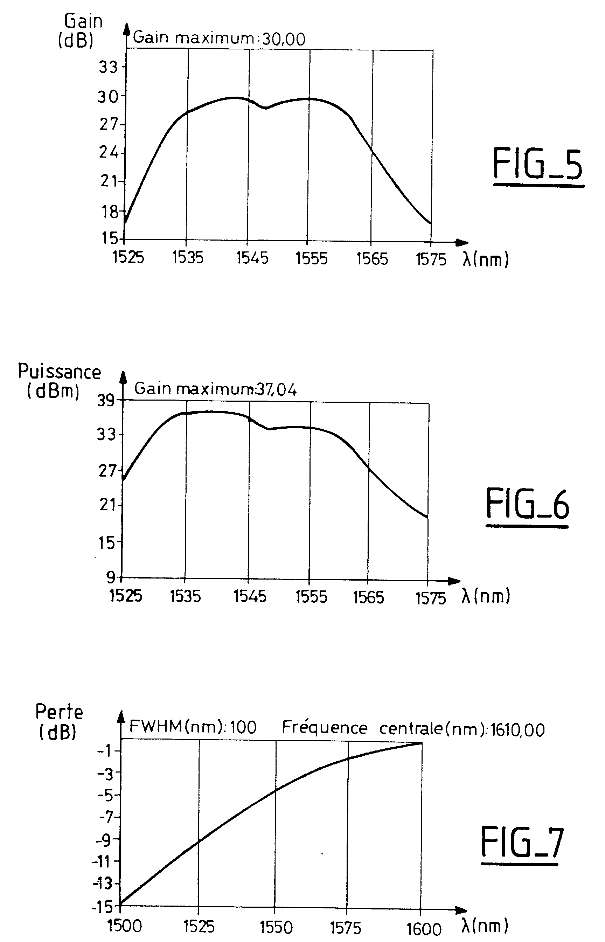

L'invention repose sur le fait surprenant que ces variations dans la platitude du gain peuvent simplement être compensées à l'aide d'un filtre en cloche. Lorsque la puissance appliquée en entrée à l'amplificateur est sensiblement égale à la puissance pour laquelle le gain est plat, la longueur d'onde centrale du filtre est réglée de sorte que la plage de longueur d'onde du système de transmission se trouve sur la partie centrale du filtre. De la sorte, le filtre ne modifie pas ou quasiment pas l'allure du gain du dispositif d'amplification; il n'introduit en outre que peu de pertes, la perte d'insertion du filtre étant classiquement relativement faible, i. e. de l'ordre de 1 dB. Ceci apparaît sur les figures 3 à 5. La figure 3 montre l'allure de la fonction de transfert de l'amplificateur, avec en abscisses les longueurs d'onde en manomètres, et en ordonnées le gain de dBm; la figure 4 montre l'allure de la fonction de transfert du filtre, accordé à la longueur d'onde centrale, avec en ordonnées les pertes en dBm, et en abscisses la longueur d'onde en manomètres; la figure 5 montre la fonction de transfert du dispositif d'amplification dans son ensemble, avec en ordonnées le gain en dBm, et en abscisses la longueur d'onde en manomètres. On constate que la présence du filtre ne modifie quasiment pas l'allure du gain, qui reste plat. La perte introduite par le filtre est limitée, et est quasiment nulle.

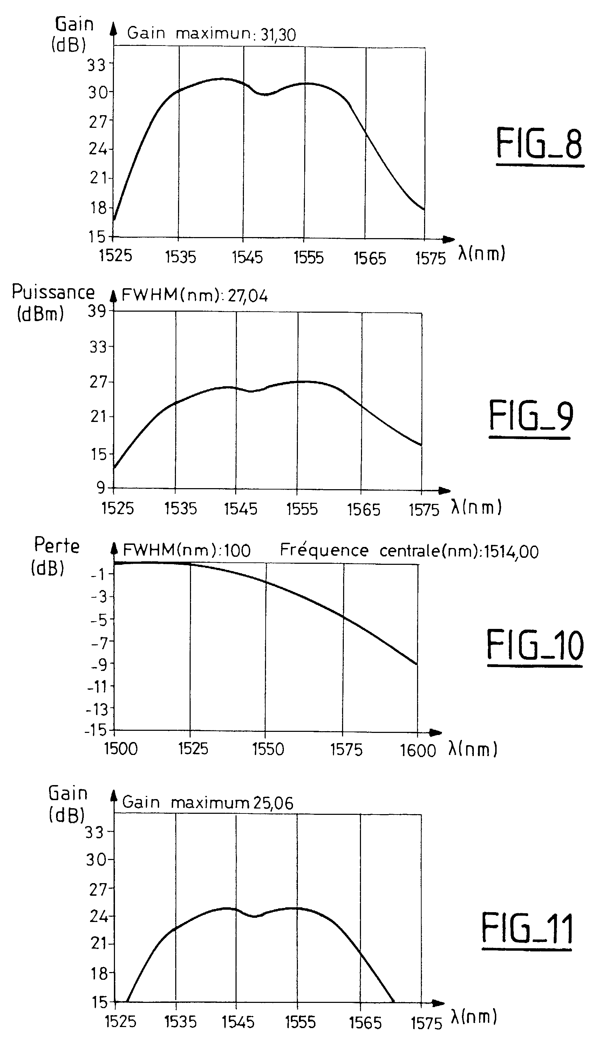

Lorsque la puissance appliquée au dispositif d'amplification est inférieure à la puissance donnée - les pertes en ligne sont supérieures aux pertes moyennes- , le gain de l'amplificateur n'est plus plat, mais décroissant, et on règle la longueur d'onde centrale du filtre de telle sorte que la plage de longueur d'onde du système de transmission se trouve sur le flanc gauche du filtre. La pente du filtre compense alors la variation de gain de l'amplificateur, et le dispositif d'amplification dans son ensemble présente un gain plat. La figure 6 montre dans un tel cas l'allure du gain de l'EDFA, pour une variation de puissance d'entrée de 5 dB, dans le même système de coordonnées que la figure 3. La figure 7 montre l'allure des pertes du filtre, accordé de sorte que la longueur d'onde de travail - dans l'exemple centrée sur 1550 nm - se retrouve sur le flanc gauche du filtre. De nouveau, les coordonnées sont les mêmes que celles de la figure 4. La représentation de la figure 7 correspond à un réglage de la longueur d'onde centrale du filtre à +62 nm. La figure 8 montre le gain du dispositif d'amplification, i. e. le produit des fonctions de transfert des figures 6 et 7, avec des coordonnées identiques à celles de la figure 5. On constate que le gain présente de nouveau une bonne platitude sur la plage du multiplex, et que l'atténuation induite par le filtre est de l'ordre de 3 dBm.

Inversement, lorsque la puissance appliquée au dispositif d'amplification est supérieure à la puissance donnée - les pertes en ligne sont inférieures aux pertes moyennes - le gain de l'amplificateur n'est plus plat, mais croissant et on règle la longueur d'onde centrale du filtre de telle sorte que la plage de longueur d'onde du système de transmission se trouve sur le flanc droit du filtre. La pente du filtre compense alors la variation de gain de l'amplificateur, et le dispositif d'amplification dans son ensemble présente de nouveau un gain plat. Les figures 9 à 11 sont des vues analogues aux figures 6 à 8, avec les mêmes coordonnées: la figure 9 montre l'allure du gain de l'EDFA; pour une variation de puissance d'entrée de 5 dB, ce gain est croissant. La figure 10 montre l'allure des pertes du filtre, accordé de sorte que la longueur d'onde de travail - dans l'exemple centrée sur 1550 nm - se retrouve sur le flanc droit du filtre, pour un réglage de la longueur d'onde centrale du filtre à -34 nm. La figure 11 montre le gain du dispositif d'amplification: on observe de nouveau que le gain présente de nouveau une bonne platitude sur la plage du multiplex, et que l'atténuation induite par le filtre est de l'ordre de 3 dBm.

L'invention permet ainsi une adaptation simple et efficace du gain des dispositifs d'amplification, en fonction de la puissance d'entrée qui leur est appliquée.

A l'inverse des dispositifs de l'art antérieur décrits plus haut, l'invention ne propose pas l'égalisation d'un gain dans les conditions de fonctionnement de l'EDFA: en effet, pour la puissance donnée - la puissance correspondant aux pertes en ligne moyennes - l'amplificateur présente un gain optimisé et plat. Elle propose en revanche de compenser les variations de la pente du gain, pour des puissances différentes de la puissance théorique attendue. Elle repose sur la constatation surprenante qu'un filtre simple suffit pour une telle compensation, malgré l'allure des variation du gain.

En outre, à l'inverse des dispositifs connus, l'invention permet de compenser les variations du gain dans un sens comme dans l'autre, grâce au choix approprié du domaine de variation de la longueur d'onde centrale du filtre. Dans le cas où la pente de la réponse spectrale du filtre est une fonction décroissante monotone de la longueur d'onde, plus le domaine de variation de la longueur d'onde centrale du filtre est grand, plus la plage de puissance d'entrée susceptible d'être corrigée est importante.

Bien entendu, la présente invention n'est pas limitée aux exemples et modes de réalisation décrits et représentés, mais elle est susceptible de nombreuses variantes accessibles à l'homme de l'art. On pourrait ainsi utiliser l'invention dans un autre contexte que les systèmes de transmission à multiplexage de longueur d'onde, et très généralement pour assurer la platitude du gain d'un amplificateur sur une plage de puissance d'entrée importante. La forme du filtre en cloche n'est pas limitée à celle représentée sur la figure 2: la fonction de transfert du filtre peut être constituée de segments de droite, par exemple.

## Revendications

1. Un système de transmission à fibre optique dans une plage de longueur d'onde donnée, comprenant une pluralité de sections de fibre de ligne séparées par des dispositifs d'amplification, caractérisé en ce que chaque dispositif d'amplification comprend un amplificateur (1) présentant une excursion de gain optimale dans la dite plage pour une puissance d'entrée correspondant aux pertes moyennes dans la section de fibre de ligne précédente, et un filtre (2) présentant une fonction de transfert en cloche, dont la longueur d'onde centrale est accordable sur un domaine suffisant pour réduire l'excursion de gain de l'amplificateur sur la dite plage pour des puissances reçues par l'amplificateur de part et d'autre de la dite puissance d'entrée.

2. Système selon la revendication 1, caractérisé en ce que le système est un système de transmission à multiplexage de longueur d'onde, et en ce que la plage de longueur d'onde est la plage de longueur d'onde du multiplex.

3. Système selon la revendication 1 ou 2, caractérisé en ce que l'amplificateur est un amplificateur à fibre optique dopée présentant une seule section de fibre, et en ce que le filtre est disposé après ladite section.

4. Système selon la revendication 1 ou 2, caractérisé en ce que l'amplificateur est un amplificateur à fibre optique dopée présentant une pluralité de sections de fibre, et en ce que le filtre est disposé avant la dernière section de fibre.

5. Système selon l'une des revendications 1 à 4, caractérisé en ce que la longueur d'onde centrale est accordable sur un domaine suffisant pour faire changer le signe de la pente moyenne de la fonction de transfert du filtre dans la dite plage de longueur d'onde.

6. Système selon l'une des revendications 1 à 5, caractérisé en ce que la pente de la réponse spectrale du filtre est une fonction décroissante monotone de la longueur d'onde.

7. Dispositif d'amplification comprenant un amplificateur (1) présentant une excursion de gain optimale dans une plage de longueur d'onde donnée pour une puissance d'entrée donnée, et un filtre (2) présentant une fonction de transfert en cloche, dont la longueur d'onde centrale est accordable sur un domaine suffisant pour permettre de réduire l'excursion de gain de l'amplificateur sur la dite plage pour des puissances reçues par l'amplificateur de part et d'autre de la dite puissance d'entrée.

8. Dispositif selon la revendication 7, caractérisé en ce que l'amplificateur est un amplificateur à fibre optique dopée présentant une seule section de fibre, et en ce que le filtre est disposé après ladite section.

9. Dispositif selon la revendication 7, caractérisé en ce que l'amplificateur est un amplificateur à fibre optique dopée présentant une pluralité de sections de fibre, et en ce que le filtre est disposé avant la dernière section de fibre.

10. Dispositif selon la revendication 7, 8 ou 9, caractérisé en ce que la longueur d'onde centrale est accordable sur un domaine suffisant pour faire changer le signe de la pente moyenne de la fonction de transfert du filtre dans la dite plage de longueur d'onde.

11. Système selon l'une des revendications 7 à 10, caractérisé en ce que la pente de la réponse spectrale du filtre est une fonction décroissante monotone de la longueur d'onde.

12. Procédé d'adaptation d'un amplificateur optique (1) à une puissance d'entrée, comprenant les étapes de
- choix d'un amplificateur présentant une excursion de gain optimale pour une puissance d'entrée donnée;
- association de l'amplificateur à un filtre (2) à fonction de transfert en forme de cloche dont la longueur d'onde centrale est accordable;
- accord de longueur d'onde centrale du filtre pour réduire l'excursion de gain de l'amplificateur sur la dite plage en fonction de la puissance reçue par l'amplificateur.

13. Procédé selon la revendication 12, caractérisé en ce que la longueur d'onde centrale est accordable sur un domaine suffisant pour faire changer le signe de la pente moyenne de la fonction de transfert du filtre dans la dite plage de longueur d'onde.

14. Procédé selon la revendication 12 ou 13, caractérisé en ce que la pente de la réponse spectrale du filtre est une fonction décroissante monotone de la longueur d'onde.
